(19) Europäisches Patentamt
European Patent Office
Office européen des brevets

(11) **EP 2 859 937 A1**

(12) **EUROPEAN PATENT APPLICATION**

(43) Date of publication:
**15.04.2015 Bulletin 2015/16**

(51) Int Cl.:
**B01D 63/08** (2006.01)

(21) Application number: **13188349.8**

(22) Date of filing: **11.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Statkraft AS**
**0216 Oslo (NO)**

(72) Inventors:
• **REINHARDT, Eugen**
**23909 Ratzeburg (DE)**
• **REINHARDT, Mirko**
**23843 Bad Oldesloe (DE)**
• **BREKKE, Geir M**
**0493 Oslo (NO)**

(74) Representative: **Plougmann & Vingtoft A/S**
**Rued Langgaards Vej 8**
**2300 Copenhagen S (DK)**

(54) **A frame, a flexible element and a system for pressure retarded osmosis power generation**

(57) The invention relates to a flexible element (18) suitable to be used in a Pressure Retarded Osmosis (PRO) power plant which can be easily produced in large quantity, tested and assembled. The element comprises a frame having three openings one being closed by two membranes (19,21) and a spacer (22) inbetween and overlaid by further spacers (23,26). The invention relates also to a system and a method to produce a system suitable to be used in PRO where a stack of flexible elements is arranged in a pressurized vessel so as to define hollow areas for fluid passage between an internal surface of the pressure vessel and a side surface of the stack of flexible elements.

Fig. 6

**Description**

FIELD OF THE INVENTION

The present invention relates to a frame, a flexible element and a system for pressure retarded osmosis (PRO) power generation.

The particular use is in PRO, such as in PRO driven power plants. Various aspect of the invention relates to different structures, comprising semi-permeable membranes and spacers and method of producing frames and flexible elements.

BACKGROUND OF THE INVENTION

For centuries it has been known that when salt water and fresh water are partitioned in two different chambers separated by a semi-permeable membrane, made for example of a biological membrane, e.g. of hog's bladder, fresh water will press itself through the membrane. The driving force is capable of elevating the salt water level above the level of the fresh water, whereby a potential energy is obtained in the form of a static water height. The phenomenon is called osmosis and can occur when two solutions with different solute concentrations are separated by a semi-permeable membrane. The energy potential can be utilized by several technical methods where the energy can be recovered. Osmotic power plants have proven to have an enormous potential as to generation of power. Such plants comprise a membrane module wherein fresh water (feed fluid) and salt water (draw fluid) is separated by a semi-permeable membrane allowing feed to flow into the draw solution.

Thus PRO generally refers to the salinity gradient energy retrieved from the difference in the salt concentration between solution having different salinity, e.g. between seawater and fresh water.

It has been demonstrated that pressure retarded osmosis in praxis beneficially can be used to generate power although there still remain some issues as to production of among others the membrane unit. For production of power by PRO the membrane area should be in the order of several hundred square meters to achieve an economical and effective process. Additionally the membranes need support to allow fixation in the membrane unit.

As of today no such large sized membrane modules industrially produced in large quantity, that can be easily singularly tested, assembled and replaced are available.

Hence, an improved frame, a flexible element and a system adapted to be used in a PRO power plant would be advantageous, and in particular a more efficient and/or reliable frame, flexible element and system that can be easily produced in large quantity, tested and assembled would be advantageous.

OBJECT OF THE INVENTION

It may be seen as an object of the present invention to provide a product that solves the above mentioned problems of the prior art with respect to inter alia size, easy and fast production, low price and suitability for PRO.

In particular, it may be seen as an object of the present invention to provide a frame, a flexible element and a system for PRO power generation.

It is a further object of the present invention to provide an alternative to the prior art.

SUMMARY OF THE INVENTION

The frame and element dimension is crucial for use in PRO power plants. For producing power by PRO the active area should be in the order of several hundred square meters to achieve an economical and effective process. Producing elements having such a large active area and at the same time achieving the properties needed for application in a PRO system is not straightforward. Large size membranes have for example the drawback of collapsing and thereby preventing fluid flow across the membrane. Other problems with large area membrane is that the sealing along large perimeter may cause leakage problems in particularly upon use under the pressures involved in a PRO driven power plant. The frame and element of the invention, comprising large area for a membrane, having a structure, e.g. the presence of spacer, and an optimal support and sealing of the membrane to the frame, and in between the elements, complies with the requirements for PRO application overcoming the potential problems deriving from the use of large area structures.

Thus, the above described object and several other objects are intended to be obtained in a first aspect of the invention by providing a frame for a flexible element for application in PRO systems. The frame comprises a first, a second and a third opening throughout the frame. The frame substantially extends in a plane. Thus throughout is defined as from one side of the plane to the other side of the plane, i.e. through the entire thickness of the frame.

Preferably, the frame may be octagonally, rectangular, stretch diamond, stretch hexagonal or ellipsoid shaped, the first opening being centrally placed in the frame and the second and third openings being placed on opposite sides of the first opening along an axis going through the center of the first opening and the centers of the second and the third opening.

The first opening may be substantially larger than the second and the third opening. For example, the area of the first opening may be between 0.4 and 1.5 square meters while the second and third opening may have an area between 10 and 300 square centimeters.

The second and third opening each are at least partially surrounded by a slit structure.

The slit structure allows for a fluid passage between the second or third opening and the first opening.
The slit structure may be made of the same material of the frame. In some embodiments the slit structure may be also made of materials different from the one of the rest of the frame.

Fluid refers to substances being in liquid phase.

In some embodiments the slit structure comprises at least one channel for a fluid passage between the second or third opening and the first opening.
In some embodiments the at least one channel for fluid passage is delimited by at least two sheet elements.
The two sheet elements may be thin sheet of materials, such as foils, integrated into the frame, e.g. being part of the frame. The slit structure may be thus integrated into the frame.
The two sheet elements or foils delimit a channel for fluid passage, i.e. define an area between the second and the first or between the third and the first opening providing a path for the fluid flowing from the second or third opening towards the first opening.
At least one of the two sheet elements may be produced by means of injection molding techniques together with the frame. In some embodiments at least one of the two sheet elements is preformed and subsequently attached to the frame.
Thus in some embodiments the slit structure comprises two foils separated by a fluid passage between the second or third opening and the first opening.
The slit structure may be defined as a narrow passage between two foils, such as polymer foil, integrated in the frame.
Spacers or structural elements, e.g. integral channels or other elements maybe integrated in the slit structure so as to provide support to the structure and avoid collapsing of the structure and shutting of the channels under PRO operation conditions.
The use of integral channels may thus provide a slit structure with more than one channel.
In general the slit structure is adapted to withstand PRO condition of operation.
In some embodiments in the frame according to the first aspect of the invention an area of at least one surface of the frame surrounding the first opening comprises a continuous recess along the perimeter of the first opening, thereby providing a recessed area on the at least one surface of the frame.
The continuous recess is defined as a large indentation on an area of one surface of the frame.
The indentation is continuous, i.e. extends along the perimeter of the first opening without interruptions.
The recessed area produced by the continuous recess is continuous along the perimeter of the first opening and the area in correspondence to the sides of the frame is wider than the area in correspondence to the slit structures.
The recessed area provides support to the semi-permeable membrane and eventual spacer located onto the semi-permeable membrane when the frame is used to produce a flexible element for PRO power generation.
In some embodiments the recessed area comprises one or more protrusion extending out of the recessed area.
The discontinuous protrusions may be protuberances, such as bulges, protruding outwards the recessed area.
The presence of one or more discontinuous protrusions on the recessed surface allows for the formation of fluid channels when two or more flexible elements are stacked onto each other. Thus the protrusions extending out of the recessed area ensure a flow path of fluid in between frames and thus in between flexible elements comprising frames.
When two frames are stacked onto each other, the overlay of the discontinuous protrusions creates passages for fluids in between the frames and towards the first openings.
In some embodiments the frame may be produced by injection molding techniques.
For example, the frame may be produced in a single injection molding process. In some embodiments the frame is produced by assembling different parts such as polymer elements. For example, the frame may be produced by assembling different foils of polymer.
Shape and size of the frame extend over shape and size that are currently commercially available.
For example the frame may have a diameter between 0.8 m and 1.5 meters.
As mentioned earlier the first opening is substantially larger than the second and the third opening. In some embodiments the first opening has an area between 0.4 and 1.5 square meters.
In some further embodiments the frame has a total thickness in the range between 0.001 and 0.006 meters.
The combination of the features of the frame being thin, having large areas and with a large first opening provides a frame with a high degree of flexibility that is suitable for application in PRO systems.
In some other embodiments the thickness of the recessed area has a total thickness in the range between 0.0005 and 0.003 meters.
The recessed area is thinner than the total thickness of the frame and provides support to the spacer and semi-permeable membrane.
In some embodiments the second and/or third opening comprise/s one or more continuous or discontinuous protuberance on an area of a first surface surrounding the second and/or third opening. The one or more continuous or discontinuous protuberance are complementary to one or more continuous or discontinuous indentation located on an area of a second and opposite surface surrounding the second and/or third opening of the frame.

The continuous or discontinuous protuberance are complementary to one or more continuous or discontinuous indentation so that upon overlaying two frames the protuberances and the indentations can be used to attach the frames so as to ensure a fluid tight fastening between two frames.

In a second aspect of the invention a flexible element for application in PRO systems is provided. The flexible element comprises: a frame according to the first aspect of the invention; a first semi-permeable membrane fasten to a first surface of the frame; a second semi-permeable membrane fasten to a second surface of the frame; wherein the first and second semi-permeable membrane are fasten onto the frame over the first opening and wherein the first and second surface are opposite surfaces of the frame; a first spacer located in the first opening between the first and second semi-permeable membrane.

The first spacer, or fresh water spacer, may have the same thickness of the recess area and fit inner edge or area of the first opening.

The membrane may have a thickness less then 100 micron, for example between 30 and 300 $\mu$m.

Fasten is defined as attached by different means, e.g. by tape, glue or welding means.

Semi-permeable membrane according to the present invention may preferably be from a plastic material. Alternatively or in combination thereto the semi-permeable membrane may preferably be adapted for pressure retarded osmosis. Semi-permeable membranes according to the present invention are used in PRO driven power plants. These membranes may consist of a thin layer of a nonporous material, also referred to as the diffusion skin, and one or more layers of a porous material, also referred to as the porous layer. The porous layer of the PRO semi-permeable membrane may be characterized by a structure where porosity $\varphi$, thickness x (m), and tortuosity $\tau$, stand in relation to one another as given by the equation below

$$X \bullet \tau = \varphi \bullet S \quad \text{Equation (1)}$$

where S is a structure parameter. Such semi-permeable membrane suitable for PRO may have a S value of 0.0015 meter or lower, a porosity $\varphi$ having an average value of more than 50 % and a tortuosity $\tau$ of less than 2.5.

In some embodiments first and second permeable membrane are the same types of membrane.

In some other embodiments first and second semi-permeable membrane maybe different type of semi-permeable membranes.

In some embodiments according to the second aspect of the invention the flexible element further comprises: a second spacer placed onto the frame over the first semi-permeable membrane, wherein the second spacer has edges extending over one or more edges of the first semi-permeable membrane, thereby completely overlapping the active area of the first semi-permeable membrane; and a second spacer placed onto said frame over the second semi-permeable membrane, wherein the second spacer has edges extending over one or more edges of the second semi-permeable membrane, thereby completely overlapping the active area of the second semi-permeable membrane.

Placed is defined as positioned with the edges of the recessed area without being fasten by any means.

The second spacer, or sea water spacer is an optional feature. The second spacer is not fasten but only placed on the recessed area of the frame. Advantageously, the first and the second spacers are preferably adapted to keep the membrane sheets spaced apart during use, allowing fluid to pass through them. Alternatively or in combination the first spacer and/or the second spacers may preferably acts as support for the membrane and may preferably be made from a fluid permeable material.

When in use in a PRO system the presence of spacers in the element provides support to the semi-permeable membrane and ensures avoiding collapse of the membranes on each other, which would prevent fluid flow across the membranes. The flexible elements are therefore adapted to allow for inflow of two fluids, i.e. the feed and the draw fluid, separated by the semi-permeable membrane and for outflow of two fluids, i.e. the feed and the draw fluid including part of the feed fluid.

In some embodiments the first semi-permeable membrane and/or the second semi-permeable membrane have a diameter between 0.8 and 1.5 meters.

In some further embodiments the first semi-permeable membrane and/or the second semi-permeable membrane have a thickness in the range between 0.001 and 0.006 meters.

In some embodiments the internal thickness of the frame is smaller than the external thickness of the frame, where the internal thickness is the one closer to the first opening, i.e. the recessed area.

In some further embodiments the frame has a thickness in the range between 0.001 and 0.006 meter and the first and second semi-permeable membrane have a diameter between 0.8 and 1.5 meter, thereby providing a high degree of flexibility to the flexible element.

One of the advantages of the flexible element is that it allows for industrial production of several square meters. The flexible element has also a high utilization of the membrane, i.e. a very limited amount of membrane is removed upon fastening the membrane onto the frame. Productions costs for the flexible elements is rather low due to the low cost of the material used and the minimum amount of material wasted.

The ratio between the total thickness and the recessed area thickness of the flexible element is configured so as to allow support of the semi-permeable membrane and the second spacer onto the frame for all the circumferences of the frame.

The flexible element is adapted to withstand an operation pressure of PRO power plants, for example in the range between 1 to 16 bars.

Generally, the pressure involved in PRO are in the range between 5 and 30 bars depending on the solute concentration of the fluids used. For example, the pressure involved in PRO for the side where sea water flows, of a semi-permeable membrane, may be between 5 to 26 bars. If fluids with higher concentration of salts are used the pressure may exceed this range. A typical operation pressure range for PRO is in the range between 5 to 20 bars.

In general the external pressure applied on the second spacer side is higher than the one applied on the internal side, e.g. so as to avoid damage to the membrane. The flexible element comprising the spacers and the semi-permeable membranes due to their limited thicknesses and large area, when in operation in a PRO plant reaches a low pressure drop across the semi-permeable membranes. In turn, this low pressure drop implies that a reduced loss of energy will occur in a PRO power plant employing this flexible element and thus an increase in energy conversion efficiency of the plant is achieved.

In some embodiments the edges of the second spacers and of the first and second semi-permeable membrane are supported by the recessed area.

Therefore the continuous recesses located on opposed surfaces of the frame provide supports for a second spacer and a first semi-permeable membrane and for a second spacer and a second semi-permeable membrane.

In some embodiments the recessed area is adapted to limit the movement of the semi-permeable membrane and the second spacer located onto the recessed area.

In some embodiments the one or more protrusions extending out of the recessed area provide one or more channels for fluid passage, when at least two flexible elements are stacked onto each other.

When at least two flexible elements are stacked onto each other the protrusions act as spacer between the flexible elements, thus creating channels for fluid passage between the flexible elements. The fluid flows through these channels towards the area defined by the external surface of second spacer belonging to two different flexible elements. The external surface of the second spacer is the one facing outwards, i.e. not in contact with the semi-permeable membrane.

In some embodiments the protuberance and indentation on an area of the first and of the second and opposite surface surrounding the second and/or third opening are adapted to be sealed to correspondent protuberance and indentation of a second flexible element, thereby ensuring tight seal of the area comprised between the second spacers of at least two flexible elements and alignment of the at least two flexible elements.

To ensure sealing the frames may be attached at the protuberance/indentation surface by sealing means, such as by welding or gluing. To ensure sealing a gasket may be also used.

The invention relates to a stack of flexible elements. Such stacks may preferably comprise a plurality, such as more than 50, preferably more than 100, even more preferably more than 150 flexible elements according to the second aspect of the invention. For example the stack of flexible elements may be between 350 and 1000 elements, such as between 500 and 700 elements. In some embodiments the stack of flexible elements may comprise more than 1000 elements such as between 1000 and 3000 elements. The plurality of flexible elements is preferably stacked and the elements are joined by joining correspondent protuberance and indentation so as to fasten the one element to each other and provide a sealing around the second and the third opening.

Preferably, the plurality of flexible elements may be stacked with second spacers interposed between adjacent elements. The second spacers may preferably be adapted to during use keep the semi-permeable membranes spaced apart, allowing fluid to pass through them while preventing damages to the semi-permeable membranes. The joining may preferably be provided by welding or gluing.

In a third aspect of the invention a method of producing a frame according to the first aspect of the invention by injection molding techniques is provided.

For example, the method of producing the frame ma y comprise: providing and clamping a mold; injecting molten polymer material into the mold; opening of the mold and removing the frame.

Injection speed and/or the dwell pressure and/or the dwell time and/or the cooling time may be adapted so as to produce the frame having size in the square meter range.

The challenges in injection molding a large area frame relates to the use of a little amount of plastic material to be used to realize a large area frame with a very large opening. According to some embodiments of the third aspect of the invention the frame is produced by injection molding though the use of specific temperature profiles.

According to some embodiments of the third aspect the slit structure may be produced in one piece together with the frame by injection molding techniques. According to some embodiments of the third aspect the at least one of the two sheet elements is pre-formed.

Thus at least one of the two sheet elements may be pre-formed and inserted in the mold before clamping the mold.

In a forth aspect of the invention a system for flexible element for application in PRO comprising a stack of flexible elements according to the second aspect of the invention is provided.

The stack of flexible elements may have a total membrane area larger than 300 square meters.

The system may comprise at least two fluid inlets and at least two fluid outlets. Preferably, the fluid connections may be arranged so as to provide a cross flow between fluid in between flexible elements and the fluid flowing in between first and second semi-permeable membrane. Alternatively or in combination thereto, the fluid connections are preferably arranged so as to provide a counter current between fluid flowing in between flexible elements and fluid flowing in between first and second semi-permeable membrane.

The system may further comprise a pressure vessel.

The stack of flexible elements according to the second aspect of the invention may be contained in the pressure vessel.

Pressure vessel having the size required, i.e. for containing a stack of flexible elements according to the second aspect of the invention are not commercially available. Developments towards the optimization of the pressure vessels and the system according to the fourth aspect of the invention are also comprised in some aspect the current invention.

The pressure vessel may have an inside diameter of minimum 0.8 meters. Thus, in some embodiments the internal height of the pressure vessel is at least 0.7 meters.

In some embodiments according to the fourth aspect of the invention the system further comprises end plates.

The end plates may be located at the end of a stack of flexible elements.

The end plates may comprise at least one of the at least two fluid inlets and/ or at least one of the at least two fluid outlets.

The stack of flexible elements may have a shape adapted to define a hollow area for fluid passage located between an internal surface of the pressure vessel and a side surface of the stack of flexible elements.

The external profile of the stack of flexible elements may be adapted to provide, when introduced into the pressure vessel at least two hollow areas along the longitudinal axis of the pressure vessel, said at least two hollow areas located between the internal surface of the pressure vessel and a side surface of the stack of flexible elements.

This configuration has the advantage of reducing the openings needed in the frame of the flexible elements as it employs the area between the internal surface of the pressure vessel and the side surface of the stack of flexible elements as a second fluid passage.

In a further aspect the invention relates to the use of a flexible element according to second aspect of the invention in PRO power plant.

In an aspect the invention relates to the use of a stack of flexible elements according second aspect of the invention in a PRO power plant.

In an even further aspect the invention relates to the use of a system comprising flexible elements and a pressurized vessel according to the fourth aspect of the invention in a PRO power plant.

The first, second and other aspects and embodiments of the present invention may each be combined with any of the other aspects and embodiments. These and other aspects and embodiments of the invention will be apparent from and elucidated with reference to the embodiments described hereinafter.

BRIEF DESCRIPTION OF THE FIGURES

The frame, flexible elements and system according to the invention will now be described in more detail with regard to the accompanying figures. The figures show one way of implementing the present invention and is not to be construed as being limiting to other possible embodiments falling within the scope of the attached claim set.

Figure 1 is a front view of a frame according to one aspect of the invention.
Figure 2 shows a cross section of the frame in figure 1 along the axis AA'.
Figure 3 is a front view of a frame according to some embodiments of the invention showing more than one channel in the slit structure.
Figure 4 shows a cross section of a frame comprising protuberances and indentations according to some embodiments of the invention.
Figure 5 shows a cross section of a flexible element according to a second aspect of the invention.
Figure 6 shows the flexible element of figure 5 wherein second spacers are placed onto the frame over the first and second semi-permeable membrane according to some embodiments of the invention.
Figure 7 shows two frames stacked onto each other according to some embodiments of the invention.
Figure 8 shows a system for flexible element for application in PRO comprising a stack of flexible elements according to some one aspect of the invention.
Figure 9 shows a pressure vessel containing a stack of flexible elements and having end plates according to some embodiments of the invention.
Figure 10 shows an example of the system according to figure 8.
Figure 11 shows a cross section of the pressurized vessel 35 containing a stack of flexible comprising hollow areas according to some embodiments of the invention.
Figure 12 shows a flow chart of an example of the production of the flexible element that has been optimized for automated production.
Figure 13 shows an example of a stack of flexible elements.

DETAILED DESCRIPTION OF AN EMBODIMENT

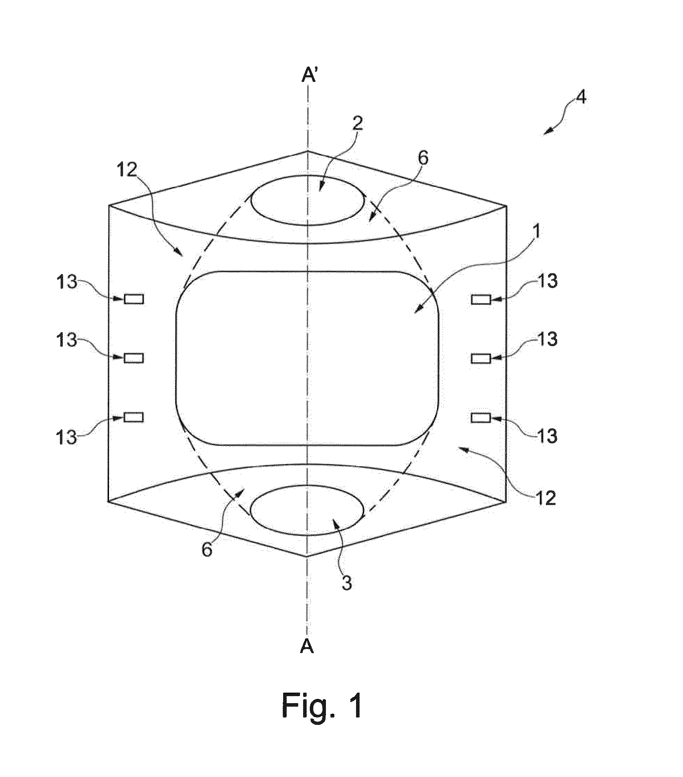

Figure 1 shows a front view of a frame 4 comprising a first 1, a second 2 and a third opening 3 throughout the frame 4. The first opening 1 has an area between 0.4 and 1.5 square meters and is larger than the second 2 and the third opening 3. The second 2 and third opening 3 are each at least partially surrounded by a slit structure 6.

The frame 4 has a large area, e.g. its diameter may be between 0.8 m and 1.5 meters and it is very thin, e.g. has a total thickness in the range between 0.001 and 0.006 meters. This provides a high degree of flexibility to the frame.

The frame 4 has a recessed area 12 that comprises one or more protrusions 13 extending out of the recessed area 12.

The total thickness of the recessed area 12 may be in the range between 0.0005 and 0.003 meters.

When two frames are stacked onto each other, the overlay of the discontinuous protrusions 13 creates passages for fluids in between the frames and towards the first opening. Thus the protrusions 13 allow for the formation of fluid channels when two or more flexible elements are stacked onto each other.

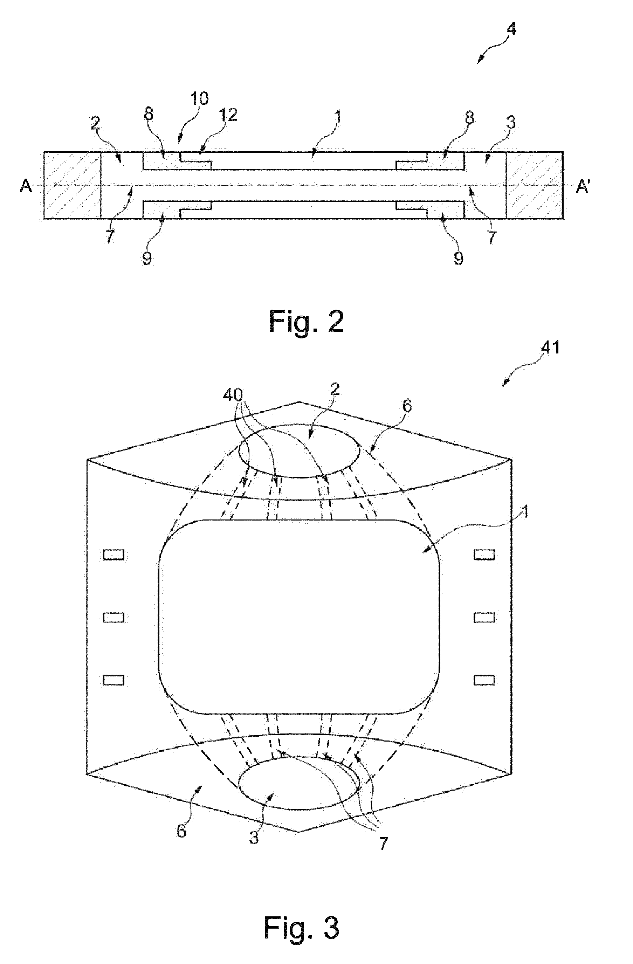

In figure 2 the cross section shows the area 10 of at least one surface of the frame 4, surrounding the first opening 1, which comprises a continuous recess 12 along the perimeter of the first opening 1. The continuous recess defines a recessed area 12. In the flexible element the recessed area has the function of supporting the semi-permeable membrane and second spacers.

In figure 2 it can be seen that the slit structure 6 comprises at least one channel 7 for a fluid passage between the second 2 or third opening 3 and the first opening 1. As shown in figure 2 the at least one channel 7 may be delimited by at least two sheet elements 8 and 9.

Figure 3 shows a front view of a frame 41 according to some embodiments of the invention having more than one channel 7 in the slit structure 6. The narrow passages or channels 7 between two foils 8 and 9 are integrated in the frame.

Figure 3 shows the presence of structural elements 40, such as spacers that: separate the slit structure 6 into several channels 7; provide support to the slit structure 6; and avoid collapsing of the slit structure 6 and shutting of the channels 7 under PRO operation conditions.

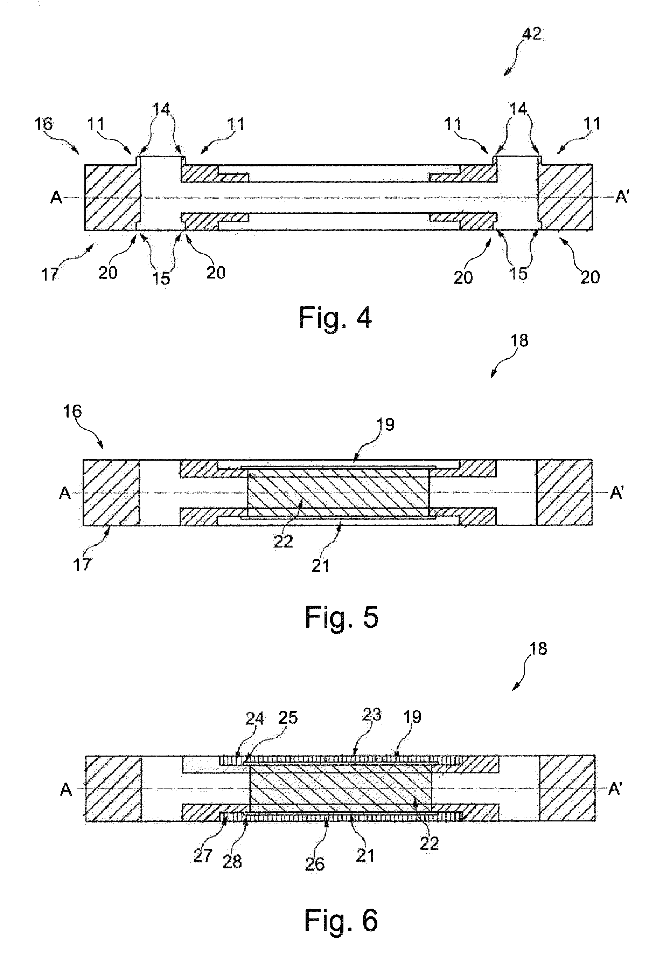

Figure 4 shows a cross section of a frame 42 wherein the second 2 and third 3 opening comprise continuous protuberances 14 on an area 11 of a first surface 16 surrounding the second and third opening. The continuous protuberances 14 are complementary to continuous indentations 15 located on an area 20 of a second and opposite surface 17 surrounding the second 2 and third 3 opening of the frame 42.

The continuous protuberances 14 are complementary to the continuous indentations 15 so that upon overlaying two frames the protuberances 14 and the indentations 15 can be used to attach the frames so as to ensure a fluid tight fastening between two frames.

In a flexible element the protuberance 14 and indentation 15 are adapted to be sealed to correspondent protuberance and indentation of a second flexible element, thereby ensuring alignment and tight seal of the area comprised between the second spacers.

Figure 5 shows a cross section of a flexible element 18 for application in PRO, i.e. a flexible element adapted to withstand a pressure in the range between 1 to 16 bars.

The flexible element is formed by a first semi-permeable membrane 19 and a second semi-permeable membrane 21 fasten onto a frame 4 or 41, as shown in figure 1 or 3 on a first surface 16 and on a second surface 17 respectively. The first 16 and second surface 17 are opposite surfaces of the frame.

The first semi-permeable membrane 19 and a second semi-permeable membrane 21 are fasten on and supported by opposite recessed area of the frame as shown in figure 5. A first spacer 22 is located in the first opening 1 in between the first semi-permeable membrane 19 and a second semi-permeable membrane 21. The first spacer 22 is not fasten to the first opening and has a size that matches the one of the first opening so as to be included into it.

Figure 6 shows the flexible element 18 of figure 5 wherein a second spacer 23 is placed onto the frame over the first semi-permeable membrane 19. The second spacer 23 overlaps the active area of the first semi-permeable membrane 19 by having edges 24 extending over one or more edges 25 of the first semi-permeable membrane 19.

A further second spacer 26 is also placed onto the frame over the second semi-permeable membrane 21. The second spacer 26 overlaps the active area of the second semi-permeable membrane 21 by having edges 27 extending over one or more edges 28 of the second semi-permeable membrane.

The second spacers 23 and 26 are both within opposite recessed area of the frame, thus the edges of the spacers are supported by recessed area located on opposite surface of the frame.

The first semi-permeable membrane 19 and the second semi-permeable membrane 21 have a diameter slightly larger than the one of the first opening, i.e. between 0.8 and 1.5 meters.

The thickness of first and second semipermeable membrane is the range between 0.001 and 0.006 meters.

The flexible element has a high degree of flexibility due to the thickness of the frame in the range between 0.001 and 0.006 meter and the large diameter of the first opening and thus in turn of the large diameter of the first and second semi-permeable membrane.

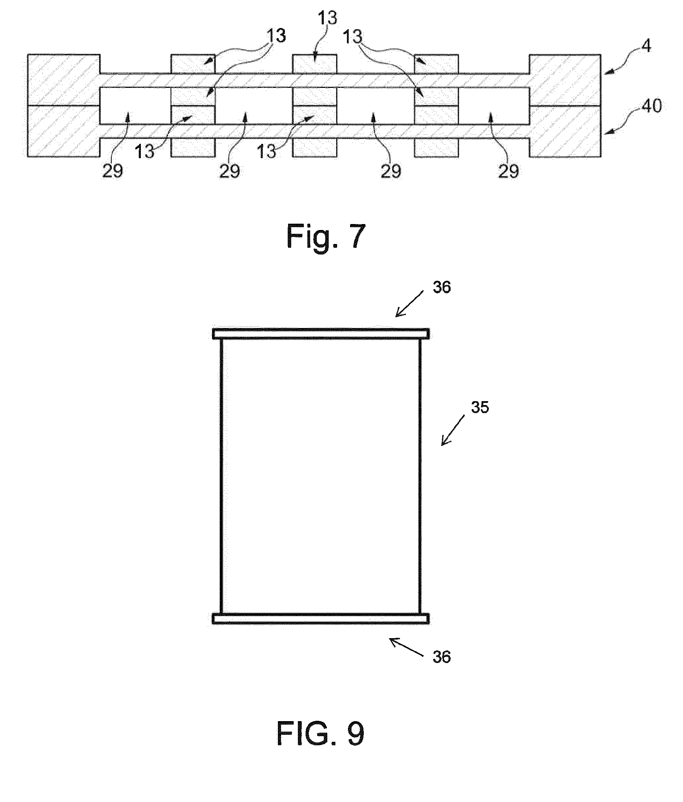

Figure 7 shows two frames 4 and 40 stacked onto each other. Figure 7 shows that when at least two flexible elements comprising frames according to some aspect of the invention are stacked onto each other, the protrusions 13 extending out of the recessed area provides channels 29 for fluid passage in between the frames.

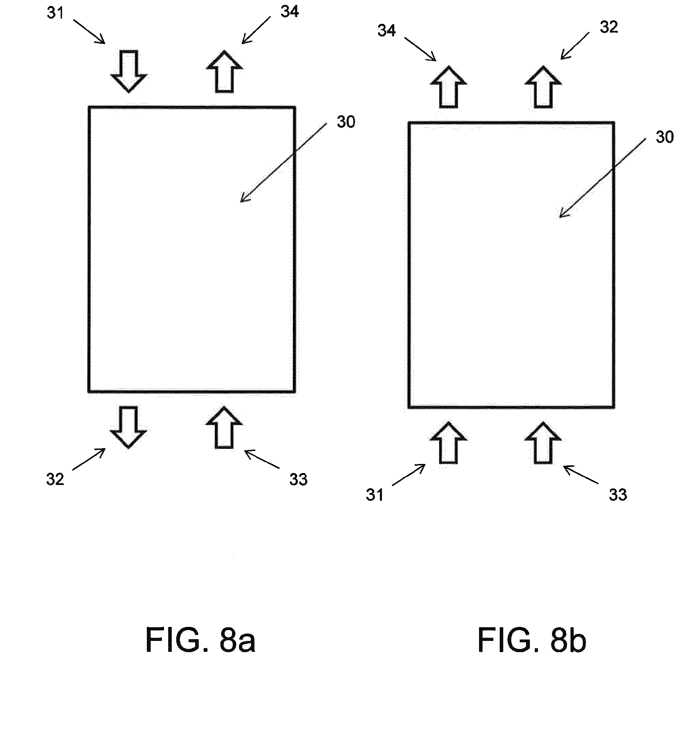

Figure 8a and figure 8b show a system 30 for flexible element for application in PRO comprising a stack of flexible elements (not shown) according to some one aspect of the invention. Figures 8a and figure 8b show the system 30 with at least two fluid inlets 31 and 33 and at least two fluid outlets 32 and 34. Inlets and outlets may be located in different areas of the system.

Figure 9 shows a pressure vessel 35 containing a stack of flexible elements 18 and having end plates 36. At least one 31 of the at least two fluid inlets 31 and/or at least one 33 of the at least two fluid outlets may be comprised in at least one of the end plates 36.

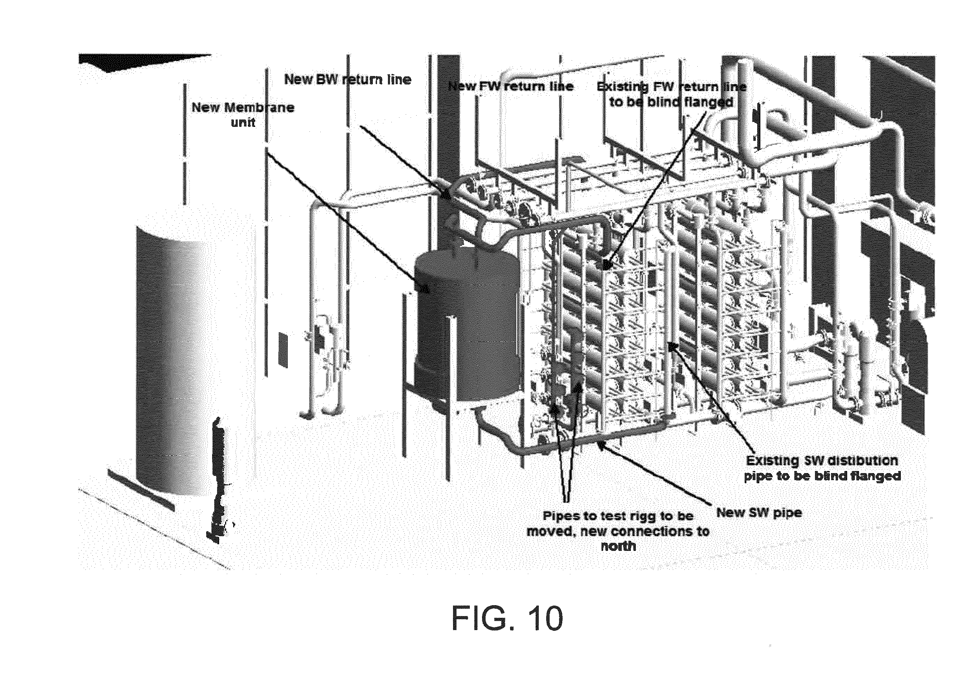

The pressure vessel 35 is a part of the system 30. An example of the system 30 may be seen in figure 10 where a 500 square meters module is shown.

The stack of flexible elements contained in the pressurized container has a large membrane area, e.g. it has a total membrane area larger than 300 square meters.

The pressure vessel has an inside diameter of minimum 0.8 meters so as to accommodate the stack of flexible elements.

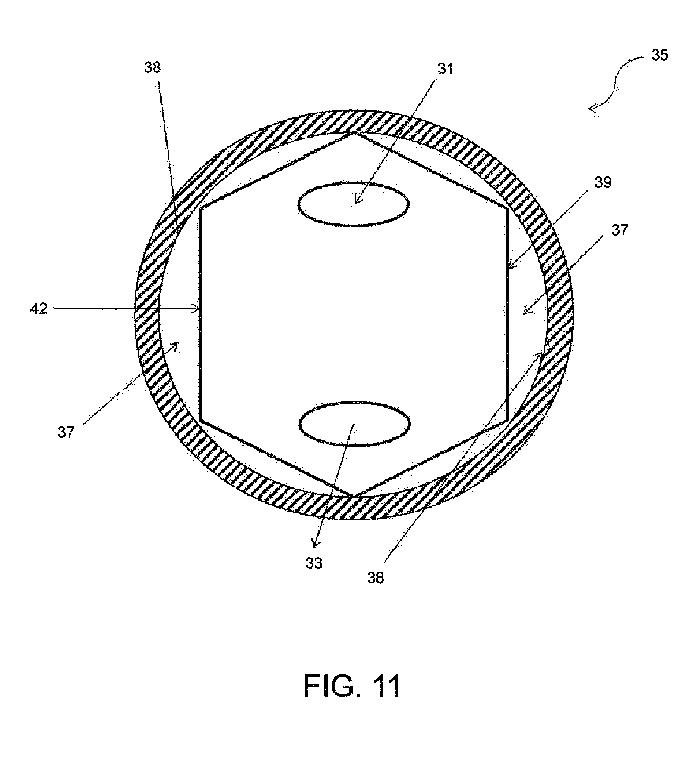

As show in in figure 11 the stack of flexible elements has a shape adapted to define a hollow area 37 for fluid passage located between an internal surface 38 of the pressure vessel 35 and a side surface 39 of the stack of flexible elements. Thus the external profile of the stack of flexible elements is adapted to provide, when introduced into the pressure vessel 35 at least two hollow areas 37 along the longitudinal axis of the pressure vessel. The two hollow areas are located between the internal surface 38 of the pressure vessel 35 and a side surface 39 of the stack of flexible elements.

Fresh water may enter the pressurized vessel 35 flow in through the second opening 31 and flow in the space between the first and second permeable membrane. In this way fresh water can diffuse across the membrane and dilute the concentration of sea water flowing on the other side of the semi-permeable membranes. The fresh water after being in contact with the semi-permeable membranes flows throughout the third opening 33.

Sea water cross flow through the channels formed by the stacking of the flexible elements. The sea water enters the pressurized vessel 35 and flows through the hollow area 37 and through the channels formed between the flexible elements. The sea water flows in contact with the second spacers located onto the semi-permeable membranes. Here the diffusion of fresh water produces a dilution of sea water so that on the opposite hollow area 37 brackish water flows out of the pressure vessel.

Seals (not shown) may be present between the stack of flexible elements and the internal surface of the pressurized vessel so as to ensure the separation between the two hollow areas where sea water and brackish water is allowed to flow.

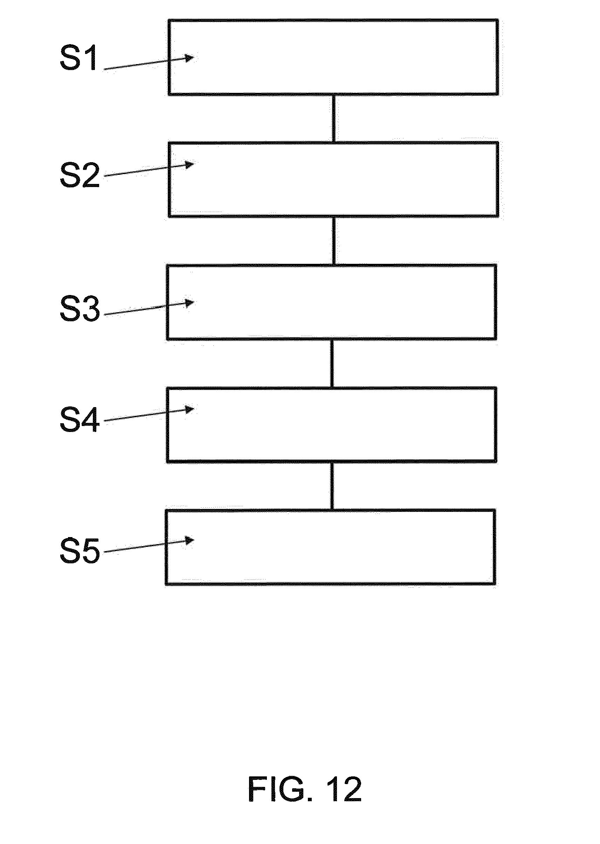

Figure 12 shows a flow chart of an example of the production of the flexible element that has been optimized for automated production.

Preferably the frame is produced by injection molding techniques, in particular may be produced in one piece together with the frame.

Alternatively one of the two sheet elements is pre-formed and inserted in the mold to be joined to the frame during the molding of the frame.

The first step (S1) of the production of the flexible elements is preparation and testing of the semi-permeable membrane. The semi-permeable membrane is prepared to be ready for assembly in the flexible element. Quality check (S2) of membranes can be manually by visual inspection or by automated scanning techniques. The flexible element is then formed.

Each frame is automatically fed into the vacuum table and prepared for gluing (S3) the semi-permeable membrane to one surface of the frame by using of another vacuum table. The frame with one semi-permeable membrane attached to it is automatically turned.

The first spacer is then placed (S4). This first spacer is premade to fit exactly into the first opening. The first spacer is not glued or attached to the frame by any means. The first spacer is kept in place by the gluing (S5) of the second semi-permeable membrane performed with help of vacuum tables.

The flexible element is thus realized.

Each element goes into an automated test procedure where the quality of each element is checked before going further it is has to pass to go further into the production process.

The way the flexible element is realized provides a great advantage as each single element can be tested before the assembly into the stack of elements.

The stack of elements is then produced. First the endplate is glued to the first flexible element. After that a second spacer is glued onto the semi-permeable membrane in the recessed area and the next element is stacked onto the first element and the protuberances and the indentations around the second and the third opening are also glued. The alternate process of introducing a second spacer and a following element is continued until the desired size of the stack of elements. When the desired size is achieved a further end plate is attached.

The stack of elements can be finally tested and inserted into a pressurized vessel.

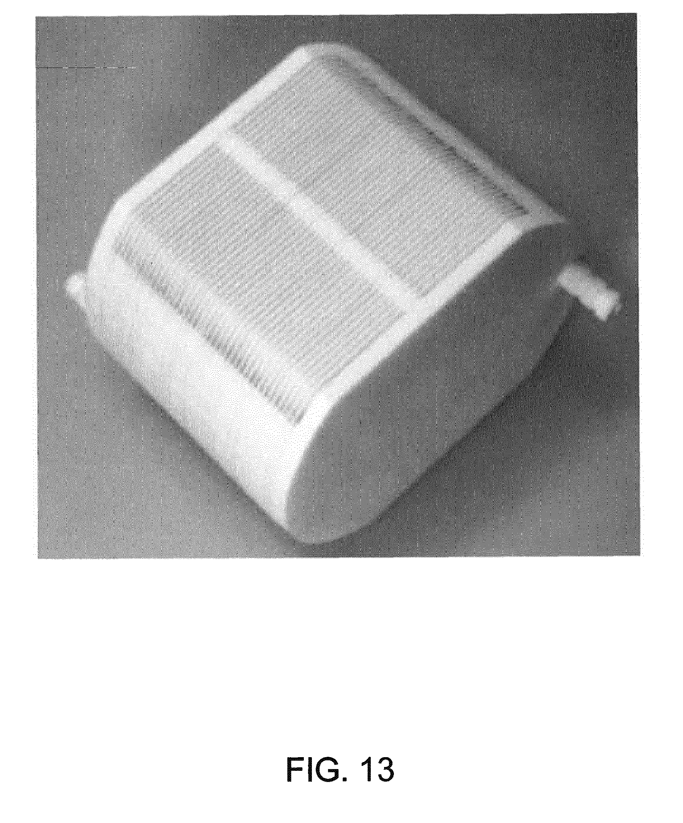

Figure 13 shows an example of a stack of flexible elements.

Although the present invention has been described in connection with the specified embodiments, it should not be construed as being in any way limited to the presented examples. The scope of the present invention is set out by the accompanying claim set. In the context of the claims and items, the terms "comprising" or "comprises" do not exclude other possible elements or steps. Furthermore, individual features mentioned in different claims and items, may possibly be advantageously combined, and the mentioning of these features in different claims and items does not exclude that a combination of features is not possible and advantageous.

**Claims**

1. A frame (4) for a flexible element (5) for application in Pressure Retarded Osmosis (PRO) systems said frame (4) comprising:

   - a first(1), a second (2) and a third opening (3) throughout said frame (4);
   - said first opening (1) being substantially larger than the second (2) and the third opening (3);
   - said second (2) and third opening (3) each being at least partially surrounded by a slit structure (6) wherein said slit structure (6) comprises at least one channel (7) for a fluid passage between said second or third opening and said first opening and wherein said at least one channel (7) for fluid passage is delimited by at least two sheet elements (8, 9).

2. A frame according to claim 1, wherein an area (10) of at least one surface of said frame, surrounding said first opening, comprises a continuous recess (12) along the perimeter of said first opening, thereby providing a recessed area (12) on said at least one surface of said frame. wherein said recessed area (12) comprises one or more protrusions (13) extending out of said recessed area.

3. A frame according to any of the preceding claims, wherein said frame is produced in a single injection molding process.

4. A frame according to any of the preceding claims, wherein said frame has a diameter between 0.8 m and 1.5 meters.

5. A frame according to any of the preceding claims, wherein said frame has a total thickness in the range between 0.001 and 0.006 meters.

6. A frame according to any of the preceding claims, wherein said second and/or third opening comprise/s one or more continuous or discontinuous protuberance (14) on an area (11) of a first surface (16) surrounding said second and/or third opening, said one or more continuous or discontinuous protuberance (14) being complementary to one or more continuous or discontinuous indentation (15) located on an area (20) of a second and opposite surface (17) surrounding said second and/or third opening of said frame.

7. A flexible element (18) for application in PRO systems, said element comprising:

   - a frame according to any of the claims 1-6;
   - a first semi-permeable membrane (19) fasten to a first surface (16) of said frame;
   - a second semi-permeable membrane (21) fasten to a second surface (17) of said frame;
   - wherein said first and second semi-permeable membrane are fasten onto said frame over said first opening and wherein said first and second surface are opposite surfaces of said frame;
   - a first spacer (22) located in said first opening between said first and second semi-permeable membrane;
   - a second spacer (23) placed onto said frame over said first semi-permeable membrane, wherein said second spacer has edges (24) extending over one or more edges (25) of said first semi-permeable membrane, thereby completely overlapping the active area of said first semi-permeable membrane;
   - a second spacer (26) placed onto said frame over said second semi-permeable membrane, wherein said second spacer has edges (27) extending over one or more edges (28) of said second semi-permeable membrane, thereby completely overlapping the active area of said second semi-permeable membrane.

8. A flexible element according to claim 7 adapted to withstand a pressure in the range between 1 to 16 bars.

9. A flexible element according to any of the preceding claims 7-8, wherein said edges of said second spacers and of said first and second semi-permeable membrane are supported by said recessed area (12).

10. A flexible element according to any of the preceding claims 7-9, wherein, said one or more protrusions (13) extending out of said recessed area (12) provide one or more channels (29) for fluid passage, when at least two flexible elements are stacked onto each other.

11. A flexible element according to any of the preceding claims 7-10, wherein said protuberance (14) and indentation (15) on an area of said first and of said second and opposite surface surrounding said second and/or third opening are adapted to be sealed to correspondent protuberance and indentation of a second flexible element, thereby ensuring tight seal of the area comprised between said second spacers of at least two flexible elements and alignment of said at least two flexible elements.

12. A system (30) for flexible element for application in PRO comprising:

   - a stack of flexible elements according to claims 7-11;
   - at least two fluid inlets (31, 33) and at least two fluid outlets (32, 34); and
   - a pressure vessel (35),

   wherein said stack of flexible elements is contained in said pressure vessel and wherein said pressure vessel has an inside diameter of minimum 0.8 meters.

13. A system according to claim 12, wherein said stack of flexible elements has a shape adapted to define a hollow area (37) for fluid passage located between an internal surface (38) of the pressure vessel and a side surface (39) of said stack of flexible elements.

14. A system according to claim12, wherein the external profile of said stack of flexible elements is adapted to provide, when introduced into said pressure vessel at least two hollow areas (37) along the longitudinal axis of said pressure vessel, said at least two hollow areas located between the internal surface of the pressure vessel and a side surface of said stack of flexible elements.

15. Use of a system comprising flexible elements and a pressurized vessel according to claims 12-14 in a PRO power plant.

Fig. 1

Fig. 2

Fig. 3

Fig. 4

Fig. 5

Fig. 6

**Fig. 7**

**FIG. 9**

FIG. 8a

FIG. 8b

FIG. 10

FIG. 11

S1

S2

S3

S4

S5

FIG. 12

FIG. 13

Europäisches
Patentamt

European
Patent Office

Office européen
des brevets

## EUROPEAN SEARCH REPORT

Application Number

EP 13 18 8349

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 225 080 A (KARBACHSCH MASSOUD [DE] ET AL) 6 July 1993 (1993-07-06) | 1 | INV. B01D63/08 |
| A | * figures * | 2,13,14 | |
| X | WO 2013/022945 A2 (OASYS WATER INC [US]; MCGINNIS ROBERT [US]; MANDELL AARON [US]; STOVER) 14 February 2013 (2013-02-14) | 1,3-8, 10-12,15 | |
| Y | * paragraph [0070] - paragraph [0077]; claim 9; figure 7 * <br> * paragraph [0109] * | 2,10 | |
| X | WO 2012/084960 A1 (STATKRAFT DEV AS [NO]; REINHARDT EUGEN [DE]; REINHARDT MIRKO [DE]) 28 June 2012 (2012-06-28) * page 8, line 31 - page 10, line 24; figures * | 1,4,5,7, 8,12-15 | |
| Y | WO 2009/045264 A2 (MILLIPORE CORP [US]; HUNT STEPHEN [US]) 9 April 2009 (2009-04-09) | 2,10 | |
| A | * figures 2-5 * | 1,7 | TECHNICAL FIELDS SEARCHED (IPC) <br><br> B01D |

The present search report has been drawn up for all claims

| Place of search | Date of completion of the search | Examiner |
|---|---|---|
| Munich | 27 January 2014 | Goers, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 18 8349

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2014

| Patent document cited in search report | | Publication date | Patent family member(s) | | Publication date |
|---|---|---|---|---|---|
| US 5225080 | A | 06-07-1993 | DE | 4028379 A1 | 12-03-1992 |
| | | | FR | 2666519 A1 | 13-03-1992 |
| | | | GB | 2248408 A | 08-04-1992 |
| | | | JP | 2711600 B2 | 10-02-1998 |
| | | | JP | H04298224 A | 22-10-1992 |
| | | | US | 5225080 A | 06-07-1993 |
| | | | US | 5422057 A | 06-06-1995 |
| WO 2013022945 | A2 | 14-02-2013 | NONE | | |
| WO 2012084960 | A1 | 28-06-2012 | NONE | | |
| WO 2009045264 | A2 | 09-04-2009 | CN | 102065985 A | 18-05-2011 |
| | | | EP | 2363197 A2 | 07-09-2011 |
| | | | ES | 2439276 T3 | 22-01-2014 |
| | | | JP | 4897085 B2 | 14-03-2012 |
| | | | JP | 2011507674 A | 10-03-2011 |
| | | | US | 2010282663 A1 | 11-11-2010 |
| | | | WO | 2009045264 A2 | 09-04-2009 |

EPO FORM P0459

For more details about this annex : see Official Journal of the European Patent Office, No. 12/82